# EUROPÄISCHE PATENTSCHRIFT

(11) **EP 1 457 271 B1**
(45) Veröffentlichungstag und Bekanntmachung des Hinweises auf die Patenterteilung: **22.06.2005**
(21) Anmeldenummer: 03027058.1
(22) Anmeldetag: 25.11.2003
(51) Int. Cl.: B09B 3/00, B08B 7/02

(54) **Verfahren zum Entfernen von Lackbeschichtungen auf einer Metallkonstruktion**
Process for the removal of a paint coating from a metallic structure
Procédé pour l'enlèvement d'une couche de peinture d'une structure métallique

(30) Priorität: 14.03.2003 DE 10311278
(43) Veröffentlichungstag der Anmeldung: 15.09.2004
(73) Patentinhaber: Theo Steil GmbH, 54293 Trier (DE)
(72) Erfinder: Metzdorf, Manfred, 54332 Wasserliesch (DE); Gondert, Klaus, 54292 Trier (DE); Gondert, Johannes, 54318 Mertesdorf (DE)
(74) Vertreter: Müller, Thomas Michael, Dipl.-Ing.

(56) Entgegenhaltungen:
- DE-A- 4 201 352
- GB-A- 191 027 728

## Beschreibung

Die Erfindung betrifft ein Verfahren zum Entfernen von Lackbeschichtungen an Metallkonstruktionen. Das Verfahren ist insbesondere zum Entfernen von asbestfaserhaltigen Lackbeschichtungen auf Schleusentoren oder Wehrtoren geeignet.

Im Wasser liegende Konstruktionselemente, wie z. B. Wehr- und Schleusentore, wurden in der Vergangenheit mit einer Lackbeschichtung als Korrosionsschutzschicht auf Bitumen- bzw. Teerbasis versehen, die mechanisch durch Asbestfasern verstärkt wurden. Die Asbestfasern gewährleisten eine hohe Lebensdauer der Lackbeschichtung.

Im Zuge der Sanierung von Wehr- und Schleusenanlagen zur Beseitigung von asbestfaserhaltigen Materialien, werden die Lackbeschichtungen von Wehr- und Schleusentoren entfernt, um diese mit nicht asbestfaserhaltigen Lackbeschichtungen zu versehen. In anderen Fällen werden die mit asbestfaserhaltigen Lackbeschichtungen versehenen Wehr- und Schleusentore vollständig entfernt und recycelt sowie durch neue Konstruktionselemente ersetzt. Beim Recyceln der Wehr- und Schleusentore werden die Lackbeschichtungen entfernt, so dass Metall der Wehr- und Schleusentore eingeschmolzen und zurückgewonnen werden kann. Beim Entfernen der Lackschichten treten aufgrund der kritischen Materialien Asbest und polycyclische aromatische Kohlenwasserstoffe, die aus teerhaltigen Beschichtungen bei der thermischen Belastung während des Einschmelzens von mit Beschichtungsresten versehenen Konstruktionselementen aus der teerhaltigen Matrix der Beschichtung austreten können, Probleme hinsichtlich der Arbeits- und Umweltsicherheit auf. Beide Stoffe gelten als krebserregende Stoffe.

Zum Entfernen der Lackbeschichtung können verschiedene Verfahren zum Einsatz kommen. Die Metallkonstruktion kann zum Beispiel sandgestrahlt werden. Bei diesem Verfahren wird die Lackbeschichtung durch den Sand als abrasive Substanz von den Oberflächen der Metallkonstruktion entfernt. Durch das Abtragen der Lackbeschichtung wird diese in kleine Partikel bzw. zu Staub zerkleinert, der Asbestfasern enthält. Da das Einatmen von Asbestfasern gesundheitliche Schäden zur Folge haben kann, müssen besondere Vorkehrungen getroffen werden, um Personal zu schützen und Umweltbelastungen zu vermeiden. Das Personal muß daher Schutzanzüge und Atemschutzmasken tragen. Ferner muß der Arbeitsbereich abgekapselt werden, so dass die asbestfaserhaltige Luft gefiltert werden kann.

Besonders nachteilig wirkt sich bei diesem Verfahren aus, dass die Menge des zu entsorgenden Materials, welches aus dem Sand und den Partikeln der entfernten Lackbeschichtung besteht, um ein Vielfaches größer ist, als die Menge der entfernten Lackbeschichtung. Aufgrund der Asbestfasern in dem zu entsorgenden Material handelt es sich um Sondermüll, der kostenintensiv und aufwendig entsorgt werden muss.

In der DE 199 21 342 A1 sind ein Verfahren gemäß Oberbegriff des Anspruchs 1 und eine Anlage zum Entfernen von asbestfaserhaltigen Lackbeschichtungen beschrieben, welche zerstörungsfrei arbeiten und somit sowohl bei der Sanierung von Wehr- und Schleusentoren als auch bei der Verschrottung von Wehr- und Schleusentoren eingesetzt werden können.

Bei dem beschriebenen Verfahren wird die Lackbeschichtung mittels Hochdruckwasserstrahlen von den beschichteten Konstruktionselementen entfernt. Dem Hochdruckwasserstrahl kann eine Substanz beigemengt werden, welche die Wirkung des Hockdruckwasserstrahls erhöht. Hierbei kann es sich um ein feste Substanz handeln, die eine abrasive Wirkung aufweist. Die Lackbeschichtung wird somit durch den Hochdruckwasserstrahl in kleine Partikel zerkleinert, die im Wasser gebunden sind. Hierdurch wird vermieden, dass Asbestfasern in der Luft freigesetzt werden. Das Abwasser ist gesondert aufzufangen und zu entsorgen. Da gemäß des vorgeschlagenen Verfahrens warmes oder heißes Wasser zum Einsatz kommen kann, muss der entstehende Wasserdampf neben dem durch das Aufsprühen des Hochdruckwasserstrahls auf die Metallkonstruktion entstehenden Wassernebel aufgefangen und kondensiert werden und dem zu entsorgenden Abwasser zugeführt werden.

Aufgrund des entstehenden Wassernebels und Wasserdampfs ist der Arbeitsbereich gegenüber der Umwelt abzukapseln, um Umweltbelastungen zu vermeiden. Zudem muß das Personal zum Schutz vor Kontakt mit dem Abwasser und dem Einatmen des Wassernebels oder des Wasserdampfes Atemschutzmasken tragen.

Ein weiterer Nachteil bei diesem Verfahren besteht darin, dass bezogen auf die Menge des zu entfernenden Lackes eine vielfach höhere Menge an Abwasser entsteht, die aufwendig und kostenintensiv entsorgt werden muss, da es sich bei dem Abwasser in der Regel um Sondermüll handelt, insbesondere wenn die entfernte Lackbeschichtung asbestfaserhaltig ist.

Aufgabe der vorliegenden Erfindung ist es, bei der Entsorgung von Metallkonstruktionen mit Lackbeschichtungen ein Verfahren zum Entfernen der Lackbeschichtungen bereitzustellen, bei dem eine geringere Menge an Sondermüll entsteht und möglichst wenig Schadstoffe an die Umgebungsluft abgegeben werden.

Die Aufgabe wird erfindungsgemäß durch ein eingangs genanntes Verfahren gelöst, bei dem die Metallkonstruktion im Bereich der Lackbeschichtung durch Zerteilen plastisch verformt wird. Da ausgehärtete Lackbeschichtungen spröder sind als Metalle, treten bei der plastischen Verformung der Metallkonstruktion unterschiedliche Dehnungen in der Lackbeschichtung und der verformten Metallkonstruktion auf, so dass sich die Lackbeschichtung von der Metallkonstruktion löst und abspringt bzw. abblättert. Somit ist gewährleistet, dass die Lackbeschichtungen ohne die Verwendung zusätzlicher Substanzen, wie z. B. Hochdruckwasser, Sand oder chemische Entlackungsmittel, entfernt werden kann. Somit muss lediglich der Lack als Sondermüll speziell entsorgt werden. Es kommen keine weiteren Substanzen hinzu. Die Kosten für die Entsorgung von mit Lack beschichteten Metallkonstruktionen lässt sich somit um ein Vielfaches reduziert.

Ein weiterer Vorteil des erfindungsgemäßen Verfahrens gegenüber dem Entfernen der Lackbeschichtung mittels Hochdruckwasserstrahlen oder Sandstrahlen besteht darin, dass der Lack nicht in derart kleine Bruchstücke zerteilt wird, so dass die Asbestfasern in Staubform freigesetzt werden und vom Bedienpersonal eingeatmet werden können, sondern in verhältnismäßig großen Teilen abblättert. Somit sind bei dem erfindungsgemäßen Verfahren für das Bedienpersonal keine besonderen Schutzmaßnahmen, wie das Tragen von Atemschutzmasken und Schutzbekleidung, erforderlich.

Vorzugsweise wird die Metallkonstruktion zerschnitten, wobei die Metallkonstruktion sukzessive in kleine Teile zerschnitten werden kann. Das bedeutet, dass die Metallkonstruktion in ihrer Gesamtheit zunächst in große Segmente zerteilt wird und im weiteren Verlauf des Verfahrens in immer kleiner werdende Teile je nach Notwendigkeit zerschnitten wird.

Um insbesondere bei asbestfaserhaltigen Lackbeschichtungen zu vermeiden, dass Asbestfasern an die Umgebungsluft abgegeben werden, kann die Metallkonstruktion vor dem Zerkleinern befeuchtet werden. Hierdurch ist gewährleistet, dass die Asbestfasern gebunden sind. Die Filtration des Wasser ist deutlich einfacher und mit weniger Aufwand zu beherrschen, als die Filtration der Umgebungsluft.

Das Zerschneiden kann mit einer stationären hydraulischen Schere oder mittels einer mobilen hydraulischen Baggerschere geschehen.

Um die Metallteile der Metallkonstruktion von den Lackbeschichtungsresten trennen zu können, ist es möglich, dass die Teile der Metallkonstruktion nach dem Zerschneiden mittels eines Magneten aussortiert werden. Somit bleiben auf der Bearbeitungsfläche die Lackbeschichtungsreste liegen, die im weiteren gesammelt und entsorgt werden können.

Da keine abrasiven Substanzen oder sonstige Hilfssubstanzen zum Einsatz kommen, ist die Menge an Sondermüll auf die abgelösten Lackbeschichtungsteile beschränkt, so dass die Kosten für die Entsorgung reduziert sind. Die Kosten des Verfahrens können unter Umständen so gering sein, dass das Zerstören der Metallkonstruktion und deren Recycling kostengünstiger ist, als die Entlackung der Metallkonstruktion auf herkömmlichen Wege und Sanierung derselben.

## Patentansprüche

1. Verfahren zum Entfernen von Lackbeschichtungen, insbesondere von asbestfaserhaltigen Lackbeschichtungen, auf einer Metallkonstruktion, insbesondere Schleusentoren
**dadurch gekennzeichnet,**
**dass** die Metallkonstruktion im Bereich der Lackbeschichtung durch Zerteilen plastisch verformt wird.

2. Verfahren nach Anspruch 1,
**dadurch gekennzeichnet,**
**dass** die Metallkonstruktion zerschnitten wird.

3. Verfahren nach einem der Ansprüche 1 oder 2,
**dadurch gekennzeichnet,**
**dass** die Metallkonstruktion sukzessive in kleine Teile zerschnitten wird.

4. Verfahren nach einem der Ansprüche 1 bis 3,
**dadurch gekennzeichnet,**
**dass** die Metallkonstruktion vor dem Zerteilen befeuchtet wird.

5. Verfahren nach einem der Ansprüche 1 bis 4,
**dadurch gekennzeichnet,**
**dass** die Metallkonstruktion mittels einer hydraulischen Schere zerschnitten wird.

6. Verfahren nach Anspruch 5,
**dadurch gekennzeichnet,**
**dass** die Metallkonstruktion mittels einer hydraulischen Baggerschere zerschnitten wird.

7. Verfahren nach einem der Ansprüche 1 bis 6,
**dadurch gekennzeichnet,**
**dass** die von der Lackbeschichtung befreiten Teile der Metallkonstruktion nach dem Zerschneiden mittels eines Magneten aussortiert werden.

## Claims

1. A method of removing paint coatings, more particularly paint coatings containing asbestos fibres, from a metal structure, more particularly lock gates,
**characterised in**
**that**, in the region of the paint coatings, the metal structure is plastically deformed by being divided.

2. A method according to claim 1,
**characterised in**
**that** the metal structure is cut up.

3. A method according to any one of claims 1 or 2,
**characterised in**
**that** the metal structure is successively cut into small parts.

4. A method according to any one of claims 1 to 3,
**characterised in**
**that** the metal structure is moistened prior to being divided.

5. A method according to any one of claims 1 to 4,
**characterised in**
**that** the metal structure is cut up by hydraulic shears.

6. A method according to claim 5,
**characterised in**
**that** the metal structure is cut up by hydraulic excavator shears.

7. A method according to any one of claims 1 to 6,
**characterised in**
**that**, after having been cut up, the metal structure parts from which the paint coating was removed are sorted by a magnet.

## Revendications

1. Procédé pour l'enlèvement de revêtements de peinture, en particulier de revêtements de peinture contenant de la fibre d'amiante, sur une structure métallique, en particulier des portes d'écluse
**caractérisé en ce que**
la structure métallique est déformée au niveau plastique par décomposition dans la zone du revêtement de peinture.

2. Procédé selon la revendication 1,
**caractérisé en ce que**
la structure métallique est broyée.

3. Procédé selon l'une quelconque des revendications 1 ou 2,
**caractérisé en ce que**
la structure métallique est déchiquetée de façon successive en petites parties.

4. Procédé selon l'une quelconque des revendications 1 ou 3,
**caractérisé en ce que**
la structure métallique est humidifiée avant le déchiquetage.

5. Procédé selon l'une quelconque des revendications 1 ou 4,
**caractérisé en ce que**
la structure métallique est déchiquetée au moyen d'une cisaille hydraulique.

6. Procédé selon la revendication 5,
**caractérisé en ce que**
la structure métallique est déchiquetée au moyen d'une cisaille d'excavateur hydraulique.

7. Procédé selon l'une quelconque des revendications 1 ou 6,
**caractérisé en ce que**
les parties, libérées du revêtement de peinture, de la structure métallique sont triées au moyen d'un aimant après le déchiquetage.
